# EUROPEAN PATENT APPLICATION

(11) **EP 0 982 110 A1**
(43) Date of publication of application: **01.03.2000**
(21) Application number: 98919544.1
(22) Date of filing: 11.05.1998
(51) Int. Cl.: B29C 39/02, B29C 39/22, C08L 33/08

(54) **WOOD-LIKE MOLDING, PROCESS FOR PREPARING THE SAME, AND COMPOSITION FOR MOLDING**

(30) Priority: 13.05.1997 JP 12245297
(71) Applicant: Du-Pont-MRC Co., Ltd., Tokyo 107-0062 (JP); MISAWA HOMES CO. LTD, Tokyo 168-0072 (JP)
(72) Inventor: MUKAI, Nobuhiro, Toyama-shi Toyama 931-8405 (JP); SHIBAZAKI, Masaaki, Toyama-shi Toyama 931-8405 (JP); KAMITE, Masayuki Misawa Homes Co., Ltd., Suginami-ku Tokyo 168-0072 (JP); HASUMI, Konomi Misawa Homes Co., Ltd., Suginami-ku Tokyo 168-0072 (JP)
(74) Representative: Jones, Helen Marjorie Meredith
(86) International application number: JP9802069
(87) International publication number: WO9851463

(57) **Abstract**

Disclosed are a woody molded article comprising a polymer (A) mainly composed of a polymethacrylate, an inorganic filler (B) and a cellulose-based fine particle (C) [preferably, a cellulose-based fine particle (D) carrying an inorganic pigment sunk on the surface]; and a method for producing a woody molded article wherein a raw material composition is molded according to a casting molding method. This woody molded article causes no fuzzy feeling, reveals uniform woody pattern, shows woody feeling fully induced, and causes no change in appearance such as irregular color and the like for a long period of time and no heat baking in molding.

## Description

### TECHNICAL FIELD

The present invention relates to a woody molded article which can be suitably used for a kitchen top board, washing and dressing table, bathtub, table, wall material, floor material, furniture, interior small articles and the like in houses and so forth, a method for producing the same, and a composition for a molded article.

### BACKGROUND ART

Recently, various synthetic resin molded articles are used for furniture and peripheral edge, skirting board, table counter and the like. And there are trials to endow these synthetic resin molded articles with appearance and feeling nearer to those of natural wood for coping with current nature-returning tendency.

For example, it is known that a synthetic resin molded article having appearance and feeling like natural wood is obtained when, in molding of a synthetic resin molded article or in forming of a resin film or coat, a suitable amount of a wood powder and a pigment which causes expression of desired hue are mixed in resin materials. Specifically, in Japanese Patent Application Laid-Open (JP-A) Nos. 6-39893 and 6-170910 and the like, a pellet obtained by mixing a wood powder and a pigment into a vinyl chloride resin, polypropylene resin and the like is subjected to thermal melt molding to obtain a woody resin molded article.

In general, a significant proportion of wood powders used for addition to resins is so improved that no charcoal gas generate by heat in thermal melt molding, for improvement of dispersibility in blending into a resin. A typical example is a surface polishing powder for a particle board which has been subjected to surface hardening treatment with phenol, urea resin and the like. It is said that this surface polishing powder is fine, and further, has granular form with excellent lubrication having a few cilium part on the surface, and exhibits excellent dispersion blending property on powdery resin materials. However, when applied for a woody resin molded article, cilium parts are practically still predominant, fuzzy feeling remains, and problems are left in appearance, coating process and the like. Further, owing to difference in raw material features of a particle board, woody property becomes uneven, further, due to difference in polishing means (for example, mesh of sand paper), unevenness tends to be caused, and obtaining a molded article having uniform hue and woody appearance is difficult.

In current condition, therefore, there is no other selection than use of a wood powder obtained by pulverizing directly wood into a fine particle and drying it, in a woody resin molded article. However, this wood powder has a disadvantage that it manifests poor pulverizing efficiency both in dry methods and wet methods and a bulky wood powder remains in large amount even if it is pulverized for a long period of time. Further, disadvantages are present that this powder does not have granular form, a significant proportion of it is in the form of fiber, and even if the shorter diameter is several micron, the longer diameter is large and when blended in a resin, wood powders are often entangled to form coagulated condition, and dispersion into a resin material becomes ununiform. Moreover, since particle size of the wood power is extremely irregular, disadvantages occur that a molded resin article tends to be endowed with molding strain and the like, and further, there is partial difference in mechanical strength, and the like. Because of these disadvantages, the wood powder obtained by directly pulverizing wood into a fine particle has restrictions on blending, color and quality control.

On the other hand, a vinyl chloride resin, ABS resin, polypropylene resin, acrylic resin and the like are generally used as molding materials for furniture, building materials and the like, a vinyl chloride resin is predominantly used in a woody resin molded article obtained by thermal melt molding. However, a vinyl chloride resin has problems that the resin itself is poor in transparency, and in addition, the transparency lowers further and texture by the mixed wood powder decreases owing to a plasticizer and the like added for the purpose of improving molding property. Furthermore, a vinyl chloride resin also has a problem that it is poor in weather resistance and appearance changes during use.

### DISCLOSURE OF INVENTION

The present invention has been made in view of the above-described conventional technologies, and the object thereof is to provide a woody resin molded article which causes no fuzzy feeling on the surface after molding, reveals uniform woody pattern, shows woody feeling fully induced derived from mixed fine particles, has so excellent weather resistance that appearance is kept without change such as irregular color and the like for a long period of time, and further, does not cause heat baking in molding, a method for producing the same, and a composition for a molded article.

The present inventors have intensively studied for attaining the above-described object, and as a result, found that use of a polymer mainly composed of a polymethacrylate having excellent woody feeling-expressing property based on transparency and having excellent weather resistance simultaneously with use of a cellulose-based fine particle suitable for expressing woody feeling, and an inorganic filler, and further, molding according to a casting molding method for obtaining a molded article in the temperature range wherein no baking occur on the cellulose-based fine particle, and the like are very effective, completing the present invention.

Namely, the above-described object of the present invention is accomplished by a woody molded article comprising a polymer (A) mainly composed of a polymethacrylate, an inorganic filler (B) and a cellulose-based fine particle (C).

Further, the above-described object of the present invention is accomplished by a composition comprising a resin component (a1) which is a methacrylate or a mixture of a methacrylate with a polymer thereof, a cross-linkable vinyl monomer (a2) having two or more vinyl groups in the molecule, an inorganic filler (B), and a cellulose-based fine particle (C), and a woody molded article obtained by molding and curing this composition.

Further, the above-described object of the present invention is accomplished by a method for producing a woody molded article wherein this composition is molded according to a casting molding method.

Further, the above-described object of the present invention is accomplished by a woody molded article obtained by conducting a cutting treatment on the surface of these molded articles.

The woody molded article of the present invention causes no fuzzy feeling on the surface, reveals uniform woody pattern, shows woody feeling fully induced derived from mixed fine particles, has soft feeling excellent in woody feeling, has so excellent weather resistance that appearance is kept without change such as irregular color and the like for a long period of time, and simultaneously, has extremely excellent dimension stability.

Further, a molded article obtained by conducting cutting treatment on this molded article has a surface more excellent in woody feeling since cross section of a cellulose-based fine particle appears on the surface.

The method for producing a woody molded article of the present invention can give a woody molded article which does not cause heat baking and coloring in molding, exhibits extremely excellent dispersibility of a fine particle, and causes small molding strain.

### BEST MODE FOR CARRYING OUT THE INVENTION

In the present invention, by use of (A) a polymer mainly composed of a polymethacrylate excellent in transparency and weather resistance, woody feeling derived from (C) a cellulose based fine particle can be fully induced and changes in appearance such as irregular color and the like can be prevented for a long period of time. As this polymer (A), a cross-linked polymer obtained by polymerizing and curing (a1) a resin component which is a methacrylate or a mixture of a methacrylate with a polymer thereof and (a2) a cross-linkable vinyl monomer having two or more vinyl groups in the molecule is preferable.

Specific examples of the methacrylate used as this resin component (a1) include methyl methacrylate, ethyl methacrylate, butyl methacrylate, 2-ethylhexyl methacrylate, benzyl methacrylate, glycidyl methacrylate and the like. These methacrylates may be used alone or in combination of two or more. Of them, methyl methacrylate is particularly preferable.

The mixture of a methacrylate and a polymer thereof used as the resin component (a1) is preferably in the form of a syrup. As the method for obtaining this syrup, there are, for example, a method in which a methacrylate is polymerized and the polymerization is terminated in mid course, a method in which a methacrylate is previously polymerized by bulk polymerization, suspension polymerization and the like to obtain a polymer which is then dissolved in a methacrylate, as well as other methods. Examples of merits of syrup use include easy prevention of precipitation of an inorganic filler (B) by control of viscosity of a syrup, polymerizable raw material in adding the inorganic filler (B), shortening of curing time of a polymerizable raw material leading to improvement in productivity, and the like.

The cross-linkable vinyl monomer having two or more vinyl groups in the molecule (a2) is a component for allowing the resin component (a1) to cross-link, and specific examples thereof include ethylene glycol di(meth)acrylate, diethylene glycol di(meth)acrylate, triethylene glycol di(meth)acrylate, tetraethylene glycol di(meth)acrylate, 1,6-hexane diol di(meth)acrylate, polybutylene glycol di(meth)acrylate, neopentyl glycol di(meth)acrylate, trimethylolpropane tri(meth)acrylate, tetramethylolmethane tri(meth)acrylate, tetramethylolmethane tetra(meth)acrylate and the like. These may be used alone or in combination of two or more. Of them, ethylene glycol dimethacrylate and trimethylolpropane trimethacrylate are particularly preferable. In the present specification, "(meth)acryl" means "acryl and/or methacryl".

The amount used of this cross-linkable vinyl monomer (a2) is preferably from 0.01 to 10 parts by weight, more preferably from 0.5 to 4.0 parts by weight based on 100 parts by weight of the resin component (a1).

Further, for curing the resin component (a1), a curing catalyst can also be used. Examples of the curing catalyst include tert-butyl peroxy maleic acid, benzoyl peroxide, cumene hydroperoxide, tert-butyl hydroperoxide, dicumyl peroxide, acetyl peroxide, lauroyl peroxide, azobisisobutylonitrile, azobisdimethylvaleronitrile and the like. When polymerized and cured at normal temperature, there are listed, for example, a combination of a peroxide, amines peroxide and sulfonic acids, a combination of a peroxide and cobalt compound, a combination of a peroxy compound such as tert-butyl peroxy maleic acid and the like, a mercaptane compound such as glycol dimercapto acetate and the like and water (de-ionized water and the like) and calcium hydroxide, as well as other combinations.

The total blending amount of the resin component (a1), cross-linkable vinyl monomer (a2) and other optional components constituting the polymer (A) [corresponding to the proportion occupying in a molded article of the polymer (A) which is a matrix resin] is preferably from 20 to 80% by weight, more preferably from 30 to 70% by weight, particularly preferably from 40 to 60% by weight based on 100% by weight of the total weight of the composition.

As the inorganic filler (B) used in the present invention, aluminum hydroxide, calcium carbonate and magnesium hydroxide are preferable, and in addition, calcium hydroxide, aluminum oxide, powder talc, powder quartz, fine silica, diatomaceous earth, gypsum, powder glass, clay mineral, powder chalk, marble, limestone, colloidal asbestos, aluminum silicate, aluminum stearate, mullite, calcium silicate, anhydrite and the like may also be used. These may be used alone or in combination of two or more. Of them, aluminum hydroxide is particularly preferable.

This inorganic filler (B) may be one of which surface has been treated with, for example, a silane-based coupling agent, titanate-based coupling agent, stearic acid and the like.

The amount blended of the inorganic filler (B) is preferably from 1 to 90% by weight, more preferably from 5 to 60% by weight, particularly preferably from 10 to 50% by weight based on 100% by weight of the total weight of the composition. As described above, if the amount blended of the inorganic filler (B) is not too less, excess heat generating in polymerization process of a resin can be fully absorbed, and foaming and baking due to heat of the cellulose-based fine particle (C) simultaneously mixed can be suppressed, and if not too much, woody feeling derived from the cellulose-based fine particle (C) becomes more excellent.

As the cellulose-based fine particle (C) used in the present invention, there are listed those obtained by pulverizing and grinding treatment of a crude pulverized substance of various plant cell bodies, raw materials such as a crude pulverized substance of wood, a crude pulverized substance of bagasse, a crude pulverized substance of paddy leaf, and the like. The particle sized of the cellulose-based fine particle (C) is preferably restricted in desired range (for example, 100 µm or less), and the water content thereof is preferably 2.0% by weight or less.

Further, this cellulose-based fine particle (C) is preferably a cellulose-based fine particle (D) carrying an inorganic pigment sunk on the surface, and this inorganic pigment is particularly preferably a white inorganic pigment. As this white inorganic pigment, titanium oxide, lithopone, white carbon, calcium carbonate, aluminum hydroxide and the like can be used, and particularly, titanium oxide is preferable for imparting sufficient whiteness to the resulting woody molded article. The particle size of this inorganic pigment is preferably controlled to be fully smaller than that of a cellulose-based fine particle. The amount of an inorganic pigment to be carried has its upper limit at an amount wherein the inorganic pigment overlaps around the cellulose-based fine particle, mother particle and covers completely the around parts, and the lower limit may be appropriately determined according to desired hue of the woody molded article.

The amount blended of this cellulose-based fine particle (C) is preferably from 0.1 to 70% by weight, more preferably from 0.5 to 50% by weight, particularly preferably from 1 to 20% by weight based on 100% by weight of the total amount of the composition. As described above, if the amount blended of the cellulose-based fine particle (C) is not too less, woody feeling of the molded article becomes more excellent, and if not too much, the slurry viscosity of the composition does not increase so much, casting molding is easy, and mechanical property of the molded article becomes more excellent.

Examples of a preferable method for producing the cellulose-based fine particle (C) [suitably the cellulose-based fine particle (D)] will be described below.

As a method for obtaining a raw material, crude pulverized substance, a method is suitable in which a tip and the like thereof is pulverized by mechanical impact pulverization to obtain a crude pulverized powder having a particle size preferably of 150 mesh, further preferably of 120 mesh or finer. For this mechanical pulverization, an impeller mill can be suitably used, for example.

Then, this raw material pulverized substance is subjected to pulverizing and grinding treatment. For example, a treating method in which a dry ball mill is used, a pulverized and ground substance (namely, raw material crude pulverized substance) is charged in the ball milk, and a ball and pulverized and ground substance are stirred for allowing them to mechanically contact in a jacket through which cooling water is circulated while appropriately controlling the surface temperature of a ceramic ball having an outer diameter of 3 mm to 5 mm is preferable.

According to such a pulverizing and grinding treatment using a ball mill, the raw material pulverized substance is mechanically crushed and abraded in contact with The surface of the ball, and is rapidly cooled in releasing from the ball mill, therefore, fiber in the raw material pulverized substance receives expansion action and is cooled quickly by repetition of heating and cooling, and by this, end part of the fiber is ground efficiently by the ball, resulting in provision of a ground cellulose-based fine particle having a few cilium around it and has granular form. Specifically, the particle size is restricted to desired range, for example, 100 µm or less, and the water content can be controlled to 2.0% by weight or less.

Then, thus obtained cellulose-based fine particle is classified to restrict the particle size to desired range (for example, from 1 to 10 µm, 10 to 20 µm, 20 to 50 µm, 50 to 100 µm) to obtain a cellulose-based fine particle (C).

In addition to the pulverizing and grinding treatment method using a ball mill as described above, there is also a method for example in which a wood powder and fine powder material are mixed in a mixing vessel and impact force is applied to them to obtain a cellulose-based fine particle (C). The cellulose-based fine particle (C) used in the present invention is not restricted by production method thereof, and may be produced by any of other methods.

As a method for producing a cellulose-based fine particle (D) carrying an inorganic pigment sunk on the surface, there is a method in which a cellulose-based fine particle produced as described above and an inorganic pigment are mixed, mechanical and thermal energy mainly composed of impact strength is applied to the resulted mixed particles while dispersing the particles into gas-phase and, the cellulose-based fine particle is used as a mother particle and a pigment particle is carried around this mother particle. This method is a method utilizing higher hardness of the pigment particle as compared with the cellulose-based fine particle, and by such difference in hardness, a condition can be maintained in which the pigment particle is sunk on the surface of the cellulose-based fine particle.

As other method, there is also a method in which a mixed particle composed of a cellulose-based fine particle and a pigment is charged into a ball mill, and an inorganic pigment particle is carried around the cellulose-fine particle by performing pulverizing and grinding treatment again. Wherein, the cellulose-based fine particle (D) used in the present invention is not restricted by production method thereof, and may be produced by any of other methods.

Thus obtained cellulose-based fine particle (D) carrying an inorganic pigment sunk on the surface will have approximately the same hue as that of the inorganic pigment (preferably, white inorganic pigment), and coagulation thereof is not recognized neither in production process nor in storage process of the fine particle (D).

In addition to the components (a1) to (D) as described above, it is preferable that various pigments such as white pigments (titanium oxide, zinc oxide), yellow pigments (iron oxide yellow), black pigments (iron oxide black, carbon black), red pigments (iron oxide red), blue pigments (ultramarine blue, phthalocyanine blue) and the like, for example, are further contained in the composition of the present invention, and it is also preferable to obtain a woody molded article having woody pattern formed. In addition, various components such as, for example, a dye, ultraviolet ray absorbing agent, flame retardant, releasing agent, fluidizing agent, polymerization inhibitor, perfume and the like can also be used.

The woody resin molded article of the present invention can be obtained, for example, by molding and a composition containing the above-described components and polymerizing and curing the molded composition. As the polymerizing and curing method, there are listed a method utilizing redox polymerization and a method in which a polymerization initiator is added and heating polymerization is conducted. Particularly, a method utilizing redox polymerization is preferable from the industrial standpoints such as equipment cost, simplicity of process, and the like.

As the molding method thereof, a casting molding method is preferable. Since the melt molding temperature of an acrylic resin is fairly higher than that of a vinyl chloride resin generally used in a woody molded article, there is a fear that heat baking with the cellulose-based fine particle (C) occurs when conducting heat melt molding and woody feeling disappears. However, according to the casting molding method, degradations such as heat baking, and coloring and form change due to heat do not occur easily, and simultaneously, dispersibility of a blended substance is extremely excellent and molding strain is small.

In this casting molding method, it is required that a blended composition has basically flowability at normal temperature, is polymerized and solidified by chemical reaction to obtain a molded article having given form. As this molding method, a batch-wise casting method using a glass cell and the like, a continuous casting molding method using a moving stainless belt and the like, a reaction injection molding method, a press molding method and the like are exemplified, and a continuous casting molding method is industrially desirable when production cost, appearance of a product, stability of physical property and the like are totally judged. Wherein, the woody molded article of the present invention is not restricted by production method thereof, and may be produced by any of other methods.

It is preferable to conduct further cutting treatment on the surface of a molded article thus obtained. This molded article which has been subjected to cutting treatment has a surface more excellent in woody feeling since cross section of a cellulose-based fine particle appears on the surface.

The following examples further illustrate the present invention in detail. In the following descriptions, "%" means "% by weight" unless otherwise stated.

### 〈Example 1〉

A mixed slurry was obtained by mixing 3787 g of a methyl methacrylate syrup composed of 20% of polymethyl methacrylate and 80% of methyl methacrylate, 3200 g of an aluminum hydroxide powder (trade name: BS-33, manufactured by Nippon Light Metal Co., Ltd.), 75.7 g of tert-butyl peroxy maleic acid (trade name: Perbutyl MA, manufactured by NOF Corp.), 41.7 g of ethylene glycol dimethacrylate (trade name: Acry Ester ED, manufactured by Mitsubishi Rayon Co., Ltd.) and 800 g of a wood powder which has a surface subjected to grinding treatment and into which 3% of titanium oxide and 37% of aluminum hydroxide had been injected (trade name: Misawa Techno Powder E60-T3A37-3W, manufactured by Techno Material K.K., hereinafter, abbreviated as "T3"), and stirring the mixture in a mixer.

This mixed slurry was defoamed in a vacuum vessel, then, 12.1 g of glycol dimercapto acetate (trade name: GDMA, manufactured by Yodo Kagaku K.K.), 19.7 g of calcium hydroxide (trade name: Microstar T, manufactured by Yahashi Kogyo K.K.) and 7.6 g of de-ionized water were further added and they were stirred. The resulted slurry was injected in a form of about 60 cm square in which a polyvinyl alcohol film (hereinafter, abbreviated as PVA film) had been laid, and other PVA film was pasted thereon. This was left in a urethane warming box for about 20 minutes to obtain a cured material in the form of a sheet having a thickness of about 13 mm.

In thus obtained molded article, baking of the wood powder did not occur in molding, the wood powder was dispersed uniformly in the resin matrix, and further, texture of the wood powder was fully induced due to transparency of the matrix resin. Therefore, the molded article was abound in wood feeling. Further, the appearance thereof did not cause color change in use for a long period of time due to excellent weather resistance originally owned by the matrix resin.

### 〈Example 2〉

A mixed slurry was obtained by mixing 5302 g of a methyl methacrylate syrup composed of 20% of polymethyl methacrylate and 80% of methyl methacrylate, 1680 g of an aluminum hydroxide powder (BS-33), 106.0 g of tert-butyl peroxy maleic acid (Perbutyl MA), 58.3 g of ethylene glycol dimethacrylate (Acry Ester ED) and 720 g of a wood powder which has a surface subjected to grinding treatment and into which 5% of titanium oxide had been injected (trade name: Misawa Techno Powder E60-T5-3, manufactured by Techno Material K.K., hereinafter, abbreviated as "T5") , and stirring the mixture in a mixer.

This mixed slurry was defoamed in a vacuum vessel, then, 17.0 g of glycol dimercapto acetate (GDMA), 27.6 g of calcium hydroxide (Microstar T) and 10.6 g of de-ionized water were further added. The resulted slurry was injected in a form of about 60 cm square in which a PVA film had been laid, and other PVA film was pasted thereon. This was left in a urethane warming box for about 20 minutes to obtain a cured material in the form of a sheet having a thickness of about 13 mm.

Thus obtained molded article manifested excellent results in baking of the wood powder, dispersibility, transparency, woody feeling, weather resistance and color change as in Example 1.

### 〈Example 3〉

A cured material in the form of a sheet was obtained as in Example 1 except that T5 was used instead of T3 as a wood powder. Thus obtained molded article manifested excellent results in baking of the wood powder, dispersibility, transparency, woody feeling, weather resistance and color change as in Example 1.

### 〈Examples 4 to 6〉

The surfaces of cured materials in the form of a sheet obtained in Examples 1 to 3 were cut with #100, #180 and #240 sand paper sequentially. The sheets subjected to surface finishing treatment as described above became those having further warm and soft woody appearance and texture.

## Claims

1. A woody molded article comprising a polymer (A) mainly composed of a polymethacrylate, an inorganic filler (B) and a cellulose-based fine particle (C).

2. The woody molded article according to Claim 1 wherein the polymer (A) mainly composed of a polymethacrylate is a cross-linked polymer.

3. The woody molded article according to Claim 1 wherein the cellulose-based fine particle (C) is a cellulose-based fine particle (D) carrying an inorganic pigment sunk on the surface.

4. The woody molded article according to Claim 1 further containing a pigment.

5. The woody molded article according to Claim 4 wherein woody pattern has been formed by mixing at least two pigments.

6. A composition comprising a resin component (a1) which is methacrylate or a mixture of a methacrylate with a polymer thereof, a cross-linkable vinyl monomer (a2) having two or more vinyl groups in the molecule, an inorganic tiller (B), and a cellulose-based fine particle (C).

7. A woody molded article obtained by molding and polymerization-curing the composition of Claim 6.

8. A method for producing a woody molded article wherein the composition of Claim 6 is molded according to a casting molding method.

9. A woody molded article obtained by conducting a cutting treatment on the surface of the molded article of Claim 1.
